# EUROPÄISCHE PATENTANMELDUNG

(11) **EP 2 806 110 A1**
(43) Veröffentlichungstag der Anmeldung: **26.11.2014**
(21) Anmeldenummer: 13168663.6
(22) Anmeldetag: 22.05.2013
(51) Int. Cl.: F01D 11/12, F01D 17/02, G01B 7/14

(54) **Turbomaschinenstufe und Verfahren zum Ermitteln eines Dichtungsspalts einer solchen Turbomaschinenstufe**

(71) Anmelder: MTU Aero Engines GmbH, 80995 München (DE)
(72) Erfinder: Zielinski, Michael, 85716 Unterschleißheim (DE); Zeisberger, Andreas, 80995 München (DE); Schneider, René, 85521 Ottobrunn (DE)

(57) **Zusammenfassung**

Die vorliegende Erfindung betrifft eine Turbomaschinenstufe, insbesondere Turbinen- oder Verdichterstufe einer Gasturbine, mit einem, insbesondere konischen, Gehäuse (2), in dem eine Laufschaufelanordnung mit mehreren Laufschaufeln (1) angeordnet ist, die ein Außendeckband (1.1) mit wenigstens einem radialen Dichtungsflansch (1.2, 1.3) aufweisen, wobei der Dichtungsflansch eine Vertiefungsanordnung mit wenigstens einer radialen Vertiefung (4) aufweist, in der, insbesondere mittig, ein radialer Vorsprung (4.1) angeordnet ist, und wobei an dem Gehäuse eine Sensoranordnung (3) mit wenigstens einem kapazitiven Sensor (3.1, 3.2) zur Erfassung eines radialen Abstandes zu einer Umfangsfläche des Dichtungsflansches angeordnet ist. Ein zugehöriges Verfahren zum Ermitteln eines Dichtungsspalts wird ebenfalls präsentiert.

## Beschreibung

Die vorliegende Erfindung betrifft eine Turbomaschinenstufe, insbesondere Turbinen- oder Verdichterstufe einer Gasturbine, mit einem, insbesondere konischen, Gehäuse, in dem eine Laufschaufelanordnung mit mehreren Laufschaufeln angeordnet ist, die ein Außendeckband mit wenigstens einem radialen Dichtungsflansch aufweisen, sowie ein Verfahren zum Ermitteln eines Dichtungsspalts einer solchen Turbomaschinenstufe.

Durch einen oder mehrere in axialer Richtung hintereinander angeordnete radiale Dichtungsflansche kann der Dichtungsspalt zwischen Gehäuse und Außendeckband reduziert werden. Dabei kann es, insbesondere infolge unterschiedlicher Betriebsbedingungen, zu einem Anstreifen zwischen Dichtungsflansch und Gehäuse, und in der Folge zu einem Abrieb am Dichtungsflansch und/oder einem Einrieb im Gehäuse kommen, so dass sich der Dichtungsspalt verändert. Die Kenntnis des aktuellen Dichtungsspalts kann vorteilhaft sein, insbesondere, um den Betrieb der Turbomaschine hieran anzupassen und/oder Wartungen auszuführen oder zu planen.

Eine Aufgabe einer Ausführung der vorliegenden Erfindung ist es, die Wartung und/oder den Betrieb einer Turbomaschinenstufe zu verbessern.

Diese Aufgabe wird durch eine Turbomaschinenstufe mit den Merkmalen des Anspruchs 1 gelöst. Anspruch 7 stellt ein Verfahren zum Ermitteln eines Dichtungsspalts einer solchen Turbomaschinenstufe unter Schutz, vorteilhafte Ausführungsformen der Erfindung sind Gegenstand der Unteransprüche.

Eine Turbomaschinenstufe nach einem Aspekt der vorliegenden Erfindung kann insbesondere eine Turbinen- oder Verdichterstufe einer Gasturbine sein, vorzugsweise eines Flugtriebwerks.

Sie weist eine Laufschaufelanordnung mit mehreren in Umfangsrichtung benachbarten Laufschaufeln auf, die mit einem Rotor der Turbomaschine lösbar oder fest, insbesondere integral, ausgebildet sein können. Die Laufschaufelanordnung ist in einem Gehäuse angeordnet, welches in einer Ausführung - wenigstens im Bereich der Laufschaufelanordnung - in Durchströmungsrichtung konvergieren oder divergieren kann, was vorliegend zur kompakteren Darstellung allgemein als konisches Gehäuse bezeichnet wird. Gleichermaßen kann das Gehäuse - wenigstens im Bereich der Laufschaufelanordnung - in Durchströmungsrichtung einen wenigstens im Wesentlichen konstanten Querschnitt aufweisen, was vorliegend entsprechend als zylindrisches Gehäuse bezeichnet wird.

Die Laufschaufelanordnung weist ein Außendeckband auf, das durch mehrere Außendeckbandabschnitte gebildet sein kann, mit denen jeweils eine oder mehrere Laufschaufeln verbunden sein können. Das Außendeckband kann in einer Ausführung in Durchströmungsrichtung konvergieren oder divergieren oder einen, wenigstens im Wesentlichen konstanten, Außenumfang aufweisen, was vorliegend entsprechend als konisches bzw. zylindrisches Außendeckband bezeichnet wird.

Radial außen auf dem Außendeckband sind ein oder mehrere, in axialer bzw. Durchströmungsrichtung voneinander beabstandete radiale Dichtungsflansche angeordnet, die sich vorzugsweise stegartig radial nach außen sowie in Umfangsrichtung erstrecken. Solche radiale Dichtungsflansche werden nachfolgend auch kurz als Dichtfinne(n) bezeichnet.

Nach einem Aspekt der vorliegenden Erfindung weist der einzige Dichtungsflansch, bei mehreren in axialer Richtung voneinander beabstandeten Dichtungsflanschen einer oder mehrere, insbesondere alle Dichtungsflansch jeweils eine Vertiefungsanordnung mit einer oder mehreren radialen Vertiefungen auf. Mehrere radiale Vertiefungen können äquidistant oder asymmetrisch über den Umfang verteilt sein. In einer Ausführung weist die Vertiefungsanordnung genau zwei, drei oder vier Vertiefungen auf. Eine Vertiefung kann in einer Ausführung zwei gegenüberliegende Flanken aufweisen, die sich in einer Weiterbildung, wenigstens im Wesentlichen, in radialer Richtung erstrecken und/oder in einen benachbarten, vorzugsweise zylinderringförmigen, Außenumfang des Dichtungsflansches übergehen, vorzugsweise in einer Rundung. Zwischen den Flanken erstreckt sich in einer Weiterbildung ein Vertiefungsgrund, der in einer Ausführung, wenigstens im Wesentlichen, eine zylinderringförmige Umfangsfläche aufweisen kann. Mithin kann eine Vertiefung in einer Ausführung insbesondere U-förmig ausgebildet sein.

In der Vertiefung ist ein radialer Vorsprung angeordnet. Er kann sich insbesondere von dem Vertiefungsgrund aus radial nach außen erstrecken und in einer Weiterbildung eine wenigstens im Wesentlichen zylinderringförmige Umfangsfläche aufweisen. Der radiale Vorsprung kann, in Umfangsrichtung gesehen, insbesondere mittig in der Vertiefung angeordnet sein, gleichermaßen aber auch außermittig. In einer Ausführung ist die Vertiefung mit dem darin angeordneten Vorsprung symmetrisch ausgebildet, was bei gegensinnigen Drehungen vorteilhaft gleichartige Signale erzeugen kann. Gleichermaßen kann die Vertiefung mit dem darin angeordneten Vorsprung auch symmetrisch ausgebildet sein, um bei gegensinnigen Drehungen vorteilhaft unterschiedliche Signale zu erzeugen.

An dem Gehäuse ist eine Sensoranordnung mit einem oder mehreren kapazitiven Sensoren bzw. Sonden zur Erfassung eines radialen Abstandes zu einer Umfangsfläche des Dichtungsflansches angeordnet. Mehrere Sensoren können äquidistant oder asymmetrisch über den Umfang verteilt sein. In einer Ausführung weist die Vertiefungsanordnung genau zwei, vier oder sechs Sensoren auf. Unter einem kapazitiven Sensor zur Erfassung eines radialen Abstandes zu einer Umfangsfläche des Dichtungsflansches wird vorliegend insbesondere ein Mittel verstanden, der ein Signal liefert, welches von einem radialen Abstand des Sensors zur Umfangsfläche, vorzugsweise nichtlinear, abhängt. Als Umfangsfläche wird vorliegend insbesondere eine Fläche eines Dichtungsflansches, einer Vertiefung bzw. eines Vorsprungs bezeichnet, die sich in Umfangs- und axialer Richtung erstreckt, mit anderen Worten die Oberseite des Dichtungsflansches, der Vertiefung bzw. des Vorsprungs von radial außenbetrachtet.

Beim Überlaufen eines Sensors durch eine Vertiefung ändert sich der radiale Abstand: zunächst vergrößert er sich, sobald der Sensor den Vertiefungsgrund erfasst. Anschließend verringert sich der radiale Abstand, wenn der Sensor den Vorsprung erfasst. Anschließend vergrößert er sich wieder, sobald der Sensor den Vertiefungsgrund auf der in Umfangsrichtung gegenüberliegenden Seite des Vorsprungs erfasst. Schließlich verringert sich der radiale Abstand wieder auf den Ausgangswert, wenn der Sensor den Vorsprung erfasst. Anschließend vergrößert er sich wieder, sobald der Sensor die Umfangsfläche des Dichtungsflansches neben der Vertiefung erfasst. Somit ergibt sich in einer Ausführung beim Vorbeidrehen einer Vertiefung an einem Sensor ein allgemein W-artiger Signalverlauf mit vier abwechselnden, gegensinnigen Signalhüben. Als Signalhub wird vorliegend insbesondere eine, insbesondere im Wesentlichen absatzförmige, Erhöhung oder Verringerung des Signals bzw. Signalwertes des Sensors bezeichnet.

Nach einem Aspekt der vorliegenden Erfindung wird wenigstens ein Signalhub der Sensoranordnung infolge einer Erfassung wenigstens einer Vertiefung der Vertiefungsanordnung und des Vorsprungs in dieser Vertiefung durch wenigstens einen Sensor der Sensoranordnung erfasst. Die nachfolgend anhand einer Vertiefung und eines bzw. zweier Sensoren erläuterte Erfassung bzw. Auswertung kann in gleicher Weise für mehrere Vertiefungen und/oder Sensoren durchgeführt werden, wobei dann in einer Ausführung die Erfassungsergebnisse miteinander abgeglichen, insbesondere gemittelt werden können.

In einer Ausführung wird der Signalhub, der sich infolge der Abstandsänderung zwischen Vertiefungsgrund und Vorsprung und/oder zwischen Vorsprung und Vertiefungsgrund ergibt, auf Basis einer vorhergehenden Kalibrierung einem Radialabstand der Laufschaufelanordnung zugeordnet: bei einem kapazitiven Sensor ändert sich die direkt oder indirekt erfasste Kapazität eines Kondensators infolge der Änderung der wirksamen Umfangsfläche des Vertiefungsgrunds bzw. Vorsprungs. Diese Änderung bzw. dieser Signalhub ist bei unterschiedlichen Radialabständen des Dichtungsflansches zum Sensor bzw. dem Gehäuse, an dem dieser angeordnet ist, unterschiedlich. Dementsprechend kann der Signalhub einem bestimmten Radialabstand zugeordnet werden, wobei in einer vorhergehenden Kalibrierung entsprechend bestimmten Radialabständen bestimmte Signalhübe zugeordnet wurden. Die Zuordnung eines erfassten Signalhubs zu einem Radialabstand auf Basis einer vorhergehenden Kalibrierung kann insbesondere durch, vorzugsweise lineare, Inter- bzw. Extrapolation zwischen Wertepaaren der Kalibrierung erfolgen.

In einer Ausführung weist die Sensoranordnung wenigstens zwei Sensoren auf, deren Erfassungsflächen mit einer Drehachse der Turbomaschinenstufe unterschiedliche, insbesondere gegensinnige, vorzugsweise wenigstens im Wesentlichen betragsgleiche Winkel einschließen. Die Winkel sind vorzugsweise betragsmäßig größer als 5°, insbesondere größer als 10°. Zusätzlich oder alternativ sind sie in einer Ausführung betragsmäßig kleiner als 25°, insbesondere kleiner als 20°. In einer Ausführung sind die Winkel, wenigstens im Wesentlichen, gleich ±15°.

Ein Sensor weist in Umfangsrichtung einen Erfassungsbereich auf. Die in axialer Richtung hintereinanderliegenden Erfassungsbereiche bilden zusammen eine Erfassungsfläche im Sinne der vorliegenden Erfindung. Ein Sensor weist insbesondere eine Erfassungsfläche auf, die mit der Drehachse einen Winkel einschließt, wenn der Sensor in axialer Richtung verschobene Vertiefungen bzw. Vorsprünge entsprechend früher bzw. später erfasst. Je größer der Betrag des Winkels ist, desto früher bzw. später erfasst der Sensor zwei in axialer Richtung verschobene bzw. miteinander fluchtende Vertiefungen. Weist beispielsweise ein Sensor eine rechteckige, dem Dichtungsflansch zugewandte Sensoroberfläche auf, deren Hauptachse mit der Drehachse der Turbomaschinenstufe einen Winkel einschließt, so schließt entsprechend die Erfassungsfläche ebenfalls diesen Winkel mit der Drehachse ein.

Durch diese gegen die Drehachse der Turbomaschine geneigten Erfassungsflächen kann entsprechend in einer Ausführung eine Axialposition der Laufschaufelanordnung erfasst werden. Hierzu wird in einer Ausführung zunächst ein Signalhub der Sensoranordnung infolge einer Erfassung einer Vertiefung der Vertiefungsanordnung und des Vorsprungs in dieser Vertiefung durch einen Sensor der Sensoranordnung erfasst. Durch Weiterdrehen des Rotors hin zum weiteren Sensor wird anschließend ein weiterer Signalhub der Sensoranordnung infolge einer Erfassung dieser Vertiefung und des Vorsprungs in dieser Vertiefung durch einen weiteren Sensor der Sensoranordnung erfasst. Der Abstand dieser Signalhübe, insbesondere der zeitliche oder der Drehwinkel-Abstand, kann dann auf Basis einer vorhergehenden Kalibrierung einer Axialposition der Laufschaufelanordnung zugeordnet werden. Konvergieren die Erfassungsflächen zweier Sensoren in axialer Richtung, so verringert sich der Abstand der Signalhübe, je weiter der Dichtungsflansch in axialer Richtung verschoben ist. Umgekehrt vergrößert sich der Abstand bei in axialer Richtung divergierenden Erfassungsflächen bzw. einer Verschiebung entgegen der axialen Richtung.

Ebenso, wie vorstehend für das Signal zwischen Vertiefungsgrund und Vorsprung bzw. Vorsprung und Vertiefungsgrund erläutert, ergibt sich auch bei Ein- bzw. Ausfahren einer Vertiefung in bzw. aus der Erfassungsfläche eines Sensors ein Signalhub. Dieser wird in einer Ausführung der vorliegenden Erfindung dazu genutzt, einen Abrieb des Dichtungsflansches zu erfassen: je größer der Abrieb, desto geringer ist der Signalhub. Entsprechend kann in einer Ausführung wenigstens ein Signalhub der Sensoranordnung infolge einer Erfassung einer Vertiefung der Vertiefungsanordnung und einer dieser Vertiefung benachbarten, insbesondere in Drehrichtung voroder nachgelagerten, Umfangsfläche des Dichtungsflansches durch einen Sensor der Sensoranordnung erfasst und dieser Signalhub auf Basis einer vorhergehenden Kalibrierung einem Abrieb des Dichtungsflansches zugeordnet werden.

Der Dichtungsspalt zwischen Dichtungsflansch und Gehäuse, insbesondere einem Einlaufbelag des Gehäuses, kann neben dem Radialabstand des Dichtungsflansches zu einem gehäusefesten Sensor und einem eventuellen Abrieb des Dichtungsflansches auch von einem Einrieb am Gehäuse und/oder der Axialposition des Dichtungsflansches abhängen. Entsprechend wird in einer Ausführung der vorliegenden Erfindung, insbesondere periodisch, ein Einrieb des dem Dichtungsflansch gegenüberliegenden Gehäuses, insbesondere eines dem Dichtungsflansch gegenüberliegenden Einlaufbelags des Gehäuses, erfasst. Dieser kann bei der Erfassung des Dichtungsspaltes berücksichtigt, insbesondere zu einem erfassten Radialabstand und/oder einem Abrieb des Dichtungsflansches hinzuaddiert werden.

Wie vorstehend erläutert, können die Signalhübe bzw. deren Abstände durch eine, vorzugsweise zweidimensionale, Kalibrierung Radialabständen bzw. Axialpositionen zugeordnet werden. Entsprechend wird in einer Ausführung der vorliegenden Erfinung zunächst aus den Abständen zwischen Signalhüben, die durch Sensoren mit gegensinnig geneigten Erfassungsflächen nacheinander dieselbe Vertiefung erfassen, eine Axialposition eines Dichtungsflansches bestimmt und anschließend aus den Signalhüben zwischen Vertiefungsgrund und Vorsprung bzw. benachbarter, nicht vertiefter Umfangsfläche des Dichtungsflansches auf Basis der zweidimensionalen Kalibrierung der Radialabstand bzw. Abrieb des Dichtungsflansches. In einer Weiterbildung zusammen mit dem ebenfalls erfassten Einrieb kann hieraus ein aktueller Dichtspalt ermittelt werden.

In einer Ausführung der vorliegenden Erfindung ist eine Umfangsfläche des radialen Vorsprungs in der Vertiefung radial abgesenkt. Hierdurch verändert auch ein Abrieb der die Vertiefung umgebenden übrigen Umfangsfläche des Dichtungsflansches den Signalhub zwischen Vertiefungsgrund und Vorsprung nicht.

Eine Vertiefung kann komplett in einem Außendeckbandabschnitt angeordnet sein. Gleichermaßen kann eine Vertiefung, insbesondere der Vorsprung, durch zwei benachbarte Außendeckbandabschnitte gemeinsam ausgebildet sein bzw. die Vertiefung, insbesondere der Vorsprung, sich über die Kontaktfläche von zwei benachbarten Laufschaufeln erstrecken. Dabei kann die Vertiefung, insbesondere der Vorsprung symmetrisch auf beide benachbarten Außendeckbandabschnitte verteilt sein bzw. sich symmetrisch zur Kontaktfläche erstrecken.

In einer Ausführung ist der Dichtungsflansch eines oder zweier benachbarter Außendeckbandabschnitte gegenüber dem Dichtungsflansch der an ihn bzw. sie anschließenden weiteren Außendeckbandabschnitte radial abgesenkt, so dass sich die Vertiefung über ein bzw. beide kompletten Außendeckbandabschnitte erstreckt. Auf diese Weise kann besonderes einfach eine Vertiefung mit einem radialen Vorsprung dargestellt werden. Der radiale Vorsprung kann an den einander zugewandten Kontaktflächen dieser benachbarten Außendeckbandabschnitte angeordnet sein.

In einer Ausführung weist die Turbomaschinenstufe ein Verarbeitungsmittel auf, das zum Durchführen eines hier beschriebenen Verfahrens eingerichtet ist. Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper - und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere einen Dichtungsspalt ermitteln kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1:: einen Teil einer Turbomaschinenstufe nach einer Ausführung der vorliegenden Erfindung in einer Ansicht in axialer Richtung;
- Fig. 2:: einen Teil der Turbomaschinenstufe der Fig. 1 längs der Schnittlinie II-II in Fig. 1;
- Fig. 3A:: ein Signal eines Sensors der Turbomaschinenstufe der Fig. 1 für eine Axialposition und einen Radialabstand einer Laufschaufelanordnung der Turbomaschinenstufe;
- Fig. 3B:: ein Signal des Sensors in Fig. 3A entsprechender Darstellung für eine andere Axialposition;
- Fig. 3C:: ein Signal des Sensors in Fig. 3A entsprechender Darstellung für einen anderen Radialabstand; und
- Fig. 4:: eine Draufsicht in radialer Richtung von außen auf einen Teil einer Abwicklung der Turbomaschinenstufe der Fig. 1.

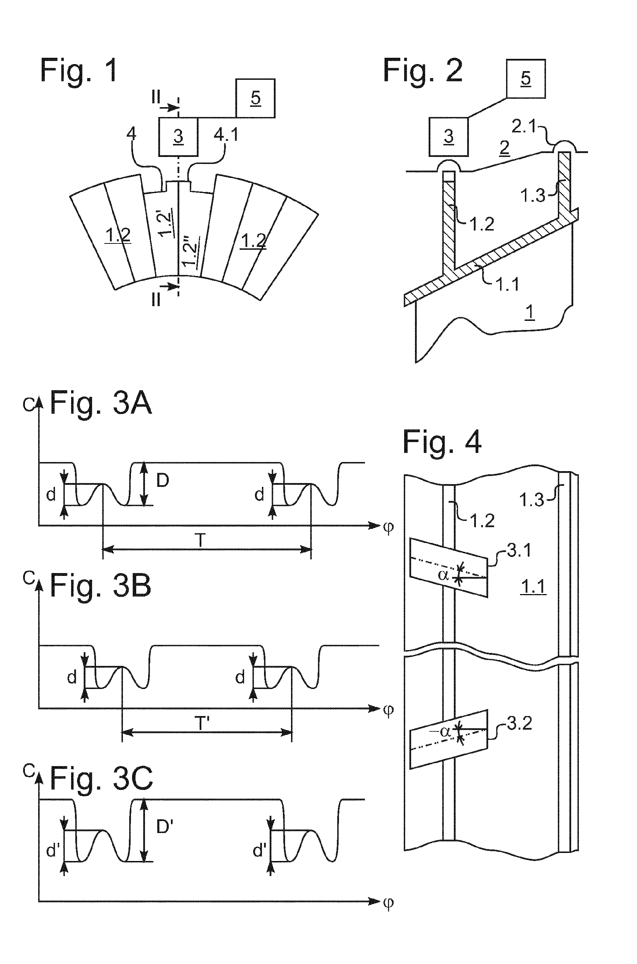

Fig. 1, 2, 4 zeigen in einer Ansicht in axialer Richtung (Fig. 1), einem Meridianschnitt (Fig. 2) bzw. einer abgewickelten Draufsicht in radialer Richtung einen Teil einer Turbomaschinenstufe nach einer Ausführung der vorliegenden Erfindung. Die Turbomaschinenstufe kann beispielsweise eine Turbinen- oder Verdichterstufe einer Gasturbine sein, vorzugsweise eines Flugtriebwerks.

Sie weist eine Laufschaufelanordnung mit mehreren in Umfangsrichtung benachbarten Laufschaufeln 1 auf. Die Laufschaufelanordnung ist in einem konischen Gehäuse 2 angeordnet.

Die Laufschaufelanordnung weist ein konisches Außendeckband 1.1 auf, das durch mehrere Außendeckbandabschnitte gebildet ist, mit denen jeweils eine oder mehrere Laufschaufeln verbunden sind.

Radial außen auf dem Außendeckband sind zwei in axialer bzw. Durchströmungsrichtung (horizontal von links nach rechts in Fig. 2, 4) voneinander beabstandete radiale Dichtungsflansche 1.2, 1.3 angeordnet, die sich stegartig radial nach außen (vgl. Fig. 1, 2) sowie in Umfangsrichtung (vgl. Fig. 1, 4) erstrecken.

Die vorliegende Erfindung wird nachfolgend mit Bezug auf den in Fig. 2, 4 linken Dichtungsflansch 1.2 näher erläutert, die Ausführungen können gleichermaßen auf den in Fig. 2, 4 rechten Dichtungsflansch 1.3 übertragen werden.

Der Dichtungsflansch 1.2 ist durch mehrere Dichtungsflanschabschnitte gebildet, die mit dem jeweiligen Außendeckbandabschnitt integral ausgebildet und von denen in Fig. 1 zur besseren Unterscheidung zwei mit 1.2' bzw. 1.2'' bezeichnet sind.

Der Dichtungsflanschen 1.2 weist eine Vertiefungsanordnung mit vier radialen Vertiefungen 4 auf, von denen in Fig. 1 eine dargestellt ist. Jede der gleichartigen Vertiefungen weist zwei gegenüberliegende Flanken (links, rechts in Fig. 1) auf, die sich im Wesentlichen in radialer Richtung erstrecken. Zwischen den Flanken erstreckt sich ein Vertiefungsgrund, der eine zylinderringförmige Umfangsfläche aufweist, so dass die Vertiefung 4 U-förmig ausgebildet ist.

In der Vertiefung 4 ist ein radialer Vorsprung 4.1 angeordnet, der sich von dem Vertiefungsgrund aus radial nach außen erstreckt und eine zylinderringförmige Umfangsfläche aufweist. Der radiale Vorsprung 4.1 ist in Umfangsrichtung gesehen mittig in der Vertiefung 4 angeordnet. Die Vertiefung 4 mit dem darin angeordneten Vorsprung 4.1 ist symmetrisch ausgebildet.

An dem Gehäuse 2 ist eine Sensoranordnung 3 mit sechs kapazitiven Sensoren zur Erfassung eines radialen Abstandes zu einer Umfangsfläche des Dichtungsflansches angeordnet von denen in Fig. 1, 2 einer und in Fig. 4 zwei Sensoren 3.1, 3.2 dargestellt sind.

Beim Überlaufen eines Sensors durch eine Vertiefung 4 ändert sich der radiale Abstand: zunächst vergrößert er sich, sobald der Sensor den Vertiefungsgrund erfasst. Anschließend verringert sich der radiale Abstand, wenn der Sensor den Vorsprung erfasst. Anschließend vergrößert er sich wieder, sobald der Sensor den Vertiefungsgrund auf der in Umfangsrichtung gegenüberliegenden Seite des Vorsprungs erfasst. Schließlich verringert sich der radiale Abstand wieder auf den Ausgangswert, wenn der Sensor den Vorsprung erfasst. Anschließend vergrößert er sich wieder, sobald der Sensor die Umfangsfläche des Dichtungsflansches neben der Vertiefung erfasst.

Somit ergibt sich beim Vorbeidrehen einer Vertiefung an einem Sensor ein allgemein W-artiger Signalverlauf mit vier abwechselnden, gegensinnigen Signalhüben. In Fig. 3A ist ein solcher Signalverlauf für die zwei benachbarten Sensoren 3.1, 3.2 beim Vorbeidrehen derselben Vertiefung 4 nacheinander an den Sensoren 3.1, 3.2 dargestellt. Dabei kann die Abszisse ϕ gleichermaßen einen Drehwinkel der Laufradanordnung oder die Zeit darstellen, da beide über die Drehgeschwindigkeit der Laufradanordnung ineinander überführbar sind.

Durch ein Verarbeitungsmittel 5 werden die Signalhübe der Sensoranordnung infolge einer Erfassung der Vertiefungen der Vertiefungsanordnung und deren Vorsprünge durch die Sensoren der Sensoranordnung erfasst.

Die Signalhübe d, die sich infolge der Abstandsänderung zwischen Vertiefungsgrund und Vorsprung und zwischen Vorsprung und Vertiefungsgrund ergeben, werden auf Basis einer vorhergehenden Kalibrierung einem Radialabstand der Laufschaufelanordnung zugeordnet. Fig. 3C zeigt den Signalverlauf der Fig. 3A für einen anderen Radialabstand zwischen Laufschaufelanordnung 1 und Sensoranordnung 3 bzw. Gehäuse 2: Man erkennt, dass sich die Signalhübe d' bei diesen unterschiedlichen Radialabständen unterscheiden. Dementsprechend kann der Signalhub d bzw. d' auf Basis einer vorhergehenden Kalibrierung jeweils einem bestimmten Radialabstand zugeordnet werden.

Die Sensoren der Sensoranordnung und ihre Erfassungsflächen bilden mit einer Drehachse der Turbomaschinenstufe gegensinnige, betragsgleiche Winkel ±α von ±15° (vgl. Fig. 4).

Durch diese gegen die Drehachse der Turbomaschine geneigten Erfassungsflächen kann eine Axialposition der Laufschaufelanordnung erfasst werden. Hierzu zeigt Fig. 3B den Signalverlauf der Fig. 3A für eine andere Axialposition der Laufschaufelanordnung 1: Es werden zunächst Signalhübe d der Sensoranordnung infolge einer Erfassung einer Vertiefung der Vertiefungsanordnung und des Vorsprungs in dieser Vertiefung durch einen Sensor 3.1 der Sensoranordnung erfasst (links in Fig. 3A, 3B).

Durch Weiterdrehen des Rotors hin zum weiteren Sensor 3.2 werden anschließend weitere Signalhübe (rechts in Fig. 3A, 3B) der Sensoranordnung infolge einer Erfassung dieser Vertiefung und des Vorsprungs in dieser Vertiefung durch den weiteren Sensor 3.2 der Sensoranordnung erfasst. Der zeitliche oder der Drehwinkel-Abstand dieser Signalhübe, in Fig. 3A, 3B durch den Abstand T bzw. T' der mittleren Spitzen angedeutet, kann dann im Verarbeitungsmittel 5 auf Basis einer vorhergehenden Kalibrierung einer Axialposition der Laufschaufelanordnung zugeordnet werden. Mit Blick auf Fig. 4 erkennt man, dass sich bei den von links nach rechts konvergierenden Erfassungsflächen der Sensoren 3.1, 3.2 der Abstand der Signalhübe verringert, je weiter der Dichtungsflansch von links nach rechts verschoben ist.

Ebenso, wie vorstehend für das Signal zwischen Vertiefungsgrund 4 und Vorsprung 4.1 bzw. Vorsprung 4.1 und Vertiefungsgrund 4 erläutert, ergibt sich auch bei Ein- bzw. Ausfahren einer Vertiefung in bzw. aus der Erfassungsfläche eines Sensors ein Signalhub D bzw. D' (vgl. Fig. 3A, 3C). Dieser wird im Verarbeitungsmittel 5 dazu genutzt, einen Abrieb des Dichtungsflansches 1.2 zu erfassen: je größer der Abrieb, desto geringer ist der Signalhub D bzw. D'. Entsprechend werden Signalhübe der Sensoranordnung infolge einer Erfassung einer Vertiefung der Vertiefungsanordnung und einer dieser Vertiefung benachbarten, insbesondere in Drehrichtung vor- oder nachgelagerten, Umfangsfläche des Dichtungsflansches durch einen Sensor der Sensoranordnung erfasst und diese Signalhübe auf Basis einer vorhergehenden Kalibrierung einem Abrieb des Dichtungsflansches zugeordnet.

Der Dichtungsspalt zwischen Dichtungsflansch und Gehäuse, insbesondere einem Einlaufbelag des Gehäuses, kann neben dem Radialabstand des Dichtungsflansches zu einem gehäusefesten Sensor und einem eventuellen Abrieb des Dichtungsflansches auch von einem Einrieb 2.1 am Gehäuse abhängen, wie er in Fig. 2 angedeutet ist. Entsprechend wird periodisch ein Einrieb des dem Dichtungsflansch gegenüberliegenden Gehäuses 2, insbesondere eines dem Dichtungsflansch gegenüberliegenden Einlaufbelags des Gehäuses, erfasst und durch das Verarbeitungsmittel 5 bei der Erfassung des Dichtungsspaltes berücksichtigt, insbesondere zu einem erfassten Radialabstand und einem Abrieb des Dichtungsflansches hinzuaddiert.

In Fig. 1 erkennt man, dass die Umfangsfläche des radialen Vorsprungs 4.1 in der Vertiefung 4 radial abgesenkt ist und dass sich die Vertiefung 4 und der Vorsprung 4.1 sich symmetrisch über die Kontaktfläche von zwei benachbarten Laufschaufeln erstrecken. Hierzu sind die Dichtungsflansche 1.2', 1.2'' zweier benachbarter Außendeckbandabschnitte gegenüber dem Dichtungsflansch 1.2 der an sie anschließenden weiteren Außendeckbandabschnitte radial abgesenkt (vgl. Fig. 1), so dass sich die Vertiefung 4 über beide kompletten Außendeckbandabschnitte 1.2', 1.2'' erstreckt. Der radiale Vorsprung 4.1 ist an den einander zugewandten Kontaktflächen dieser benachbarten Außendeckbandabschnitte 1.2', 1.2'' angeordnet.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

**Bezugszeichenliste**

| | |
|---|---|
| 1 | Laufschaufel(anordnung) |
| 1.1 | Außendeckband(abschnitt) |
| 1.2, 1.3 | Dichtungsflansch |
| 1.2', 1.2" | Dichtungsflanschabschnitt |
| 2 | Gehäuse |
| 2.1 | Einrieb |
| 3 | Sensoranordnung |
| 3.1, 3.2 | (Erfassungsfläche eines) Sensor(s) |
| 4 | Vertiefung |
| 4.1 | radialer Vorsprung |
| 5 | Verarbeitungsmittel |

## Patentansprüche

1. Turbomaschinenstufe, insbesondere Turbinen- oder Verdichterstufe einer Gasturbine, mit einem, insbesondere konischen, Gehäuse (2), in dem eine Laufschaufelanordnung mit mehreren Laufschaufeln (1) angeordnet ist, die ein Außendeckband (1.1) mit wenigstens einem radialen Dichtungsflansch (1.2, 1.3) aufweisen, wobei der Dichtungsflansch eine Vertiefungsanordnung mit wenigstens einer radialen Vertiefung (4) aufweist, in der, insbesondere mittig, ein radialer Vorsprung (4.1) angeordnet ist, und wobei an dem Gehäuse eine Sensoranordnung (3) mit wenigstens einem kapazitiven Sensor (3.1, 3.2) zur Erfassung eines radialen Abstandes zu einer Umfangsfläche des Dichtungsflansches angeordnet ist.

2. Turbomaschinenstufe nach dem vorhergehenden Anspruch, **dadurch gekennzeichnet, dass** die Sensoranordnung wenigstens zwei kapazitive Sensoren (3.1, 3.2) zur Erfassung eines radialen Abstandes zu einer Umfangsfläche des Dichtungsflansches aufweist, deren Erfassungsflächen mit einer Drehachse der Turbomaschinenstufe unterschiedliche, insbesondere gegensinnige, vorzugsweise wenigstens im Wesentlichen betragsgleiche Winkel (±α) einschließen.

3. Turbomaschinenstufe nach einem der vorhergehenden Ansprüche, **dadurch gekennzeichnet, dass** eine Umfangsfläche des radialen Vorsprungs (4.1) in der Vertiefung (4) radial abgesenkt ist.

4. Turbomaschinenstufe nach einem der vorhergehenden Ansprüche, **dadurch gekennzeichnet, dass** die Vertiefung (4), insbesondere der Vorsprung (4.1), sich, insbesondere symmetrisch, über die Kontaktfläche von zwei benachbarten Laufschaufeln erstreckt.

5. Turbomaschinenstufe nach einem der vorhergehenden Ansprüche, **dadurch gekennzeichnet, dass** sich die Vertiefung über einen kompletten oder zwei benachbarte komplette Außendeckbandabschnitte erstreckt.

6. Turbomaschinenstufe nach einem der vorhergehenden Ansprüche, **gekennzeichnet durch** ein Verarbeitungsmittel (5), das zum Durchführen eines Verfahren nach einem der nachfolgenden Ansprüche eingerichtet ist.

7. Verfahren zum Ermitteln eines Dichtungsspalts zwischen dem Dichtungsflansch der Laufschaufelanordnung und dem Gehäuse, insbesondere einem Einlaufbelag, einer Turbomaschinenstufe nach einem der vorhergehenden Ansprüche, mit dem Schritt:
Erfassen wenigstens eines Signalhubs (d, d') der Sensoranordnung infolge einer Erfassung einer Vertiefung (4) der Vertiefungsanordnung und des Vorsprungs (4.1) in dieser Vertiefung durch einen Sensor der Sensoranordnung.

8. Verfahren nach dem vorhergehenden Anspruch, **gekennzeichnet durch** den Schritt:
Zuordnen dieses Signalhubs zu einem Radialabstand der Laufschaufelanordnung auf Basis einer Kalibrierung.

9. Verfahren nach einem der vorhergehenden Ansprüche, **gekennzeichnet durch** die Schritte:
Erfassen eines Signalhubs (d;d') der Sensoranordnung infolge einer Erfassung einer Vertiefung der Vertiefungsanordnung und des Vorsprungs in dieser Vertiefung **durch** einen Sensor (3.1) der Sensoranordnung;
Erfassen eines weiteren Signalhubs (d;d') der Sensoranordnung infolge einer Erfassung dieser Vertiefung und des Vorsprungs in dieser Vertiefung **durch** einen weiteren Sensor (3.2) der Sensoranordnung; und
Zuordnen eines Abstandes (T, T') dieser Signalhübe zu einer Axialposition der Laufschaufelanordnung auf Basis einer Kalibrierung.

10. Verfahren nach einem der vorhergehenden Ansprüche, **gekennzeichnet durch** die Schritte:
Erfassen wenigstens eines Signalhubs (D, D') der Sensoranordnung infolge einer Erfassung einer Vertiefung (4) der Vertiefungsanordnung und einer dieser Vertiefung benachbarten Umfangsfläche des Dichtungsflansches **durch** einen Sensor der Sensoranordnung; und
Zuordnen dieses Signalhubs zu einem Abrieb des Dichtungsflansches auf Basis einer Kalibrierung.

11. Verfahren nach einem der vorhergehenden Ansprüche, **gekennzeichnet durch** die Schritte:
Erfassen eines dem Dichtungsflansch gegenüberliegenden Einriebs (2.1) eines Einlaufbelags des Gehäuses (2).
